Europäisches Patentamt

European Patent Office    (11) Publication number:    **0 164 456**
**B1**
Office européen des brevets

(12)    **EUROPEAN PATENT SPECIFICATION**

(45) Date of publication of patent specification: **29.06.88**    (51) Int. Cl.⁴: **B 23 K 35/36**

(21) Application number: **84201861.6**

(22) Date of filing: **04.10.82**

(60) Publication number of the earlier application in accordance with Art. 76 EPC: **0 076 681**

(54) **Flux composition.**

| | |
|---|---|
| (30) Priority: **05.10.81 US 308867** | (73) Proprietor: **RAYCHEM CORPORATION (a California Corporation) 300 Constitution Drive Menlo Park California 94025 (US)** |
| (43) Date of publication of application: **18.12.85 Bulletin 85/51** | |
| (45) Publication of the grant of the patent: **29.06.88 Bulletin 88/26** | (72) Inventor: **Cydzik, Edward Antoni 3601 Pasadena Drive San Mateo California 94403 (US)** Inventor: **Gen, Tamar G. 567 Lincoln Avenue Palo Alto California 94301 (US)** |
| (84) Designated Contracting States: **AT BE CH DE FR IT LI NL SE** | |
| (56) References cited: **JP-A-53 015 243 US-A-3 451 609 US-A-4 228 761** | (74) Representative: **Jay, Anthony William et al Raychem Limited Intellectual Property Law Department Faraday Road Dorcan Swindon Wiltshire (GB)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# 0 164 456

## Description

This invention relates to solder flux compositions, especially to solder flux compositions for use with heat-recoverable soldering devices.

Heat-recoverable soldering devices are known in the art. See, for example, U.S. Patents Nos. 3,316,125 to Sherlock, 3,305,625 to Ellis, 3,316,343 to Sherlock, 3,396,460 to Wetmore and 3,396,894 to Ellis. Such heat-recoverable devices generally comprise a heat-polymeric sleeve having a fusible insert comprising solder. Elongate substrates, such as a pair of wires, are inserted into the sleeve and heat is applied causing the sleeve to shrink into contact with the substrates. The heat also causes the solder to melt and flow around the substrates. Upon cooling, a solid solder joint is formed between the substrates. In general, the temperature required to melt the solder is higher than the temperature required to shrink the sleeve. Thus, visual observation that the sleeve has completely recovered does not necessarily mean that the temperature necessary for soldering has been reached. There is, therefore, no visible indication during the soldering process that enough heat has been applied.

Further, in the event that a soldered joint so formed fails during use, there is no way of subsequently inspecting the joint to determine whether the failure was due to inadequate heating during the soldering process.

Thermochromic indicators have been proposed for use with heat-shrinkable articles. For example US—A—4,228,761 describes the use of inorganic thermochromic pigments coated on a heat-shrinkable article, and JA—A—53—015243 describes a method of soldering metal pipes together in which a heat-shrinkable sleeve is used which has a coating of a thermochromic material that changes state at a defined temperature, for example polypropylene, which changes from opaque to clear.

According to the invention, there is provided a solder flux composition which comprises a mixture of solder-flux and a reactive component, the flux composition undergoing a chemical reaction between the flux and the reactive component resulting in a visible colour change at a critical temperature that is required to effect a solder connection.

The flux aids the flow of the solder or cleans the surfaces of the substrates to be joined or both. Various solder flux composition are known and are commercially available. Widely used as solder fluxes are compositions based on natural rosin. Other fluxes include, for example, inorganic and organic acids. In use, the solder flux melts, flows and covers the substrate surface at a temperature below the melting point of the solder. Thus the particular flux used will depend of the nature of the solder in a given application. Any solder flux can be used in accordance with this invention. The flux comprises a temperature indicating component and the particular flux and the appropriate temperature indicating component to be used in a particular application can be readily ascertained by one skilled in the art without undue experimentation. The temperature indicating component is preferably one that is compatible with the flux and does not interfere with the normal functioning of the flux.

Soldering devices that incorporate the solder flux according to the present invention are the subject of our European Patent B—76,681, and solder joints that incorporate the flux are the subject of our copending European application No. A—160752. When used in a soldering device, the solder flux is associated with the solder of the heat-recoverable soldering device. Any of the conventional means for associating flux with solder can be used. For example, a solder preform can be coated with flux by spraying, dipping, brushing or the like, usually before it has been positioned within the heat-recoverable device. The solder flux can also be used in soldering operations such as hand soldering, in which a heat-recoverable device is not employed. In this event, the flux can be coated on the solder or can be positioned within the solder, for example, in the form of a core which can be in various configurations as is well known in the art. The flux must be visible during the soldering process to detect the colour change in the flux when it reaches the appropriate temperature. It has been found that if the flux is positioned as a core within the solder, flow of the flux on heating renders it visible. A visible colour change occurs when the soldering temperature has been reached. In general, the soldering temperature is higher than the recovery temperature. Thus continued heating is required after recovery in order to effect the visible colour change of the solder flux.

The colour change of the solder flux is preferably an irreversible colour change, that is a colour change that does not reverse, for example, when the solder and flux cool and solidify. Such an irreversible change provides a continuing indication and permanent means for determining whether the soldered joint was heated to the required temperature during soldering. Thus improperly formed terminations can be detected by visual inspection after the soldered connection is completed and cooled.

The colour change of the flux is preferably from a coloured state to a substantially colourless one. The completed solder joint is thus visible for inspection through the flux. In this way, the joint itself can be inspected to check for adequate soldering and to detect improperly formed terminations, as well as to check for application of sufficient heat during the solderiong process by the change in colour of the flux.

The flux composition changes colour at a critical temperature. The desired critical temperature varies depending on the particular solder used. The critical temperature is that temperature which is required to effect a solder connection with the particular solder, that is the temperature required to cause the solder to melt, flow and wet the substrates so that on cooling the solder makes a mechanical and electrical bond between the substrates being soldered. The particular solder to be used varies depending on the substrates being joined and the material of the heat-recoverable member. The temperature required to effect the

2

solder termination is generally above the temperature required to cause recovery of the heat-recoverable member.

Since the soldering temperature varies with the nature of the solder, the temperature indicating component of the flux composition varies depending on the solder used. Preferably, the flux composition undergoes a colour change in the temperature range of from 150°C to about 450°C, especially preferably from 200°C to about 240°C. The temperature of the colour change is preferably in the range of from about 20°C to about 60°C above the melting point of the solder. Preferably, it is about 20°C to about 30°C above the melting point of a low temperature solder and about 30°C to about 60°C above the melting point of a high temperature solder.

As stated above, the flux composition contains a temperature indicator such that at a critical temperature the flux composition undergoes a colour change. Various temperature indicators can be used, for example, azo dyes such as Pigment Red 73 (an azo dye prepared from 2-nitro-p-toluidine and 2-naphthol, CI 12120), acid-base indicators such as Thymol blue, diazo dyes such as Acid Red 73 (a diazo dye derived from p-phenylazoaniline and 2-naphthol-6,8-disulfonic acid, CI 27290), and the like. In general, any dye which is compatible with the flux and which undergoes a colour change at a critical temperature, by reaction with the flux, can be used.

The flux composition contains a temperature indicator that is a chemically reactive component which undergoes a chemical reaction with the solder flux at a critical temperature to produce a colour change. Particularly preferred are flux compositions in which, at a critical temperature, the reactive component causes the flux composition to become colourless since this allows the soldered joint to be readily inspected. Suitable chemically reactive components are, for example, Bromocresol Green, Basic Fuchsine or Thymol Blue.

The temperature indicator may be incorporated into a solder flux composition by known techniques. The amount of temperature indicator incorporated into the flux is preferably in the range of from 0.01 to 5 parts per 100 parts of flux and is especially preferably from 0.05 to 2 parts per 100 parts of flux. The amount added depends on the intensity of the colour. Sufficient temperature indicator should be added to provide a flux composition which is clearly visible during the soldering operation. The flux composition may also contain additives, for example, dispersing aids such as water, alcohol or a subfactant or emulsifier, buffers, such as an acid or salt to maintain the desired pH, for example, oxalic acid, lactic acid, maleic acid, tartaric acid, fumaric acid or citric acid, and stabilizers.

The following Examples illustrate various solder flux compositions in accordance with the present invention.

Examples 1—14

Temperature indicating solder flux compositions were prepared by dispersing various dyes in a Milros #611, a commercially available rosin-based flux comprising 37% of a mixture of rosin isomers in 63% isopropyl alcohol. The dyes used and the concentrations of dye in the resulting temperature indicating flux compositions are listed in Table 1. Additives, as listed in Table 1, were added as appropriate to aid in dissolution of the pigment or to buffer the solution to maintain the desired pH. The dyes used are:

Acid Red 73 (commercially available as Scarlet M Crude), a diazo dye derived from p-phenylazoaniline and 2-naphthol-6,8-disulphonic acid. (Colour Index, CI, 27290).

Pigment Red 3 (commercially available as Atlasol Spirit Red-3) an azo dye prepared from 2-nitro-p-toluidine and 2-naphthol. (CI 12120).

Thymol Blue, commercially available and also referred to as thymolsulphonphthalien.

Pigment Red 52 (commercially available as Garnet Toner #2), an azo dye derived from 2-amino-5-chloro-p-toluenesulphonic acid and 3-hydroxy-2-naphthoic acid. (CI 15860).

Bromocresol Green, also known as 3', 3'', 5', 5''-tetrabromo-m-cresolsulphonphthalein.

Solvent Red 24, (commercially available as Atlasol Red 4B) an azo dye derived from 4-O-tolylazo-o-toluidine and 2-naphthol. (CI 26105).

Pigment Yellow 5 (also known as Lithol Fast Yelloy Y) an azo dye derived from o-nitroaniline and acetocetanilide. (CI 11660).

Basic Violet 14, also known as Basic Fuchsine, and derived from aniline and toluidine. (CI 42519).

Pigment Orange 2 (commercially available as Ozark Orange X-1481) an azo dye derived from o-nitroaniline and 2-naphthol. (CI 12060).

The flux composition was coated onto a solder pre-form which was then positioned within a heat-shrinkable sleeve made from cross-linked polyvinylidene fluoride. A solderable substrate, specifically an insulated wire with insulation removed from a segment, was inserted into the sleeve so that the uninsulated segment was positioned inside the sleeve. The sleeve was then heated causing the sleeve to shrink down onto the wire. The initial colour of the flux composition, the temperature at which the flux composition changed colour and the final colour of the flux are recorded in Table 1.

TABLE 1: TEMPERATURE INDICATING FLUX COMPOSITIONS

| | Dye | | Additive | | | | |
|---|---|---|---|---|---|---|---|
| Example | Dye | Conc. | Additive | Conc. | Initial Colour | Final Colour | Temp. of Colour Change |
| 1 | Acid Red 73 | 0.5% | Water | 10% | purple-maroon | colourless | 220°C |
| 2 | Pigment Red 3 | 0.5% | — | — | orange-red | light orange | 250°C |
| 3 | Pigment Red 3 | 1.0% | — | — | orange-red | light orange | 250°C |
| 4 | Thymol Blue | 1.0% | maleic acid | 3% | dark purple | colourless | 220°C |
| 5 | Thymol Blue | 0.5% | tartaric acid | 3% | dark purple | colourless | 220°C |
| 6 | Thymol Blue | 1.0% | citric acid | 6% | dark purple | colourless | 220°C |
| 7 | Pigment Red 52 | 1.5% | — | — | pink-purple | colourless | 220°C |
| 8 | Pigment Red 52 | 2.0% | — | — | pink-purple | colourless | 220°C |
| 9 | Pigment Red 52 | 3.0% | — | — | pink-purple | colourless | 220°C |
| 10 | Bromocresol Green | 1.0% | — | — | green | colourless | 250°C |
| 11 | Solvent Red 24 | 0.5% | — | — | red | colourless | 300°C |
| 12 | Basic Fuchsine | 0.5% | — | — | purple-red | yellowish | 260°C |
| 13 | Basic Fuchsine | 0.5% | maleic acid | 3% | purple-red | colourless | 240-245°C |
| 14 | Pigment Orange 2 | 1.5% | — | — | orange | light yellow | 240°C |

0 164 456

# 0 164 456

The novel temperature indicating flux composition is not restricted to use with heat-recoverable sleeves, but can be used in other soldering methods, for example, hand soldering. The temperature indicating flux can be applied in the same manner as flux is usually applied in the particular soldering method, and will change colour at the critical temperature. The flux can be coated onto a solder preform or incorporated into the solder. It is also possible to apply the flux to the substrate(s) to be soldered.

## Claims

1. A flux composition which comprises a mixture of solder-flux and a chemically reactive component the flux composition undergoing a chemical reaction between the flux and the reactive component resulting in a visible colour change at a critical temperature that is required to effect a solder connection.

2. A flux in accordance with claim 1, wherein said solder flux comprises a rosin-based solder flux.

3. A flux in accordance with claim 1 or claim 2, wherein said flux undergoes a change in colour from a coloured state to a substantially colourless state.

4. A flux in accordance with any one of claims 1 to 3, wherein said colour change is irreversible.

5. A flux in accordance with any one of claims 1 to 4, wherein said chemically reactive component comprises thymol-sulphonphthalein, or 3',3'',5',5''-tetrabromo-m-cresolsulphonphthalein, or an azo dye derived from aniline and toluidine.

## Patentansprüche

1. Flußmittelzusammensetzung, welche eine Mischung aus Lötflußmittel und einer chemisch reaktiven Komponente umfaßt, wobei die Flußmittelzusammensetzung eine chemische Reaktion zwischen Flußmittel und reaktiver Komponente eingeht, die in einer sichtbaren Farbänderung bei einer kritischen Temperatur, die zur Herstellung einer Lötverbindung erforderlich ist, resultiert.

2. Flußmittel nach Anspruch 1, worin das Lötflußmittel ein Lötflußmittel auf Harzbasis umfaßt.

3. Flußmittel nach Anspruch 1 oder Anspruch 2, worin das Flußmittel einen Farbwechsel aus einem farbigen Zustand in einen im wesentlichen farblosen Zustand eingeht.

4. Flußmittel nach einem der Ansprüche 1 bis 3, worin der Farbwechsel irreversibel ist.

5. Flußmittel nach einem der Ansprüche 1 bis 4, worin die chemisch reaktive Komponente Thymolsulfonphthalein oder 3',3'',5',5''-Tetrabrom-m-cresolsulfonphthalein oder einen von Anilin und Toluidin abgeleiteten Azofarbstoff umfaßt.

## Revendications

1. Composition de flux, qui comprend un mélange de flux pour soudure et un composant chimiquement réactif, la composition de flux subissant une réaction chimique entre le flux et le composant réactif, ce qui provoque un changement de couleur visible à une température critique qui est nécessaire à la réalisation d'un raccord soudé.

2. Flux selon la revendication 1, ledit flux pour soudure comprenant un flux pour soudure à base de colophane.

3. Flux selon la revendication 1 ou 2, ledit flux présentant un changement de couleur d'un état coloré à un état pratiquement incolore.

4. Flux selon l'une quelconque des revendications 1 à 3 où ledit changement de couleur est irréversible.

5. Flux selon l'une quelconque des revendications 1 à 4 où ledit composant chimiquement réactif comprend la thymolsulphonephtaléine ou la 3',3'',5',5''-tétrabromo-m-crésolsulfonephtaléine ou un colorant azoïque dérivé de l'aniline et de la toluidine.

5